# EUROPEAN PATENT APPLICATION

(11) **EP 4 254 747 A1**
(43) Date of publication of application: **04.10.2023**
(21) Application number: 23164530.0
(22) Date of filing: 28.03.2023
(51) Int. Cl.: H02K 15/00, H02K 1/16, H02K 15/06, H02K 3/487

(54) **STATOR AND WEDGE INSERTION DEVICE**

(30) Priority: 29.03.2022 JP 2022054233
(71) Applicant: NIDEC CORPORATION, Minami-ku, Kyoto 601-8205 (JP)
(72) Inventor: HASHIMOTO, Ayumu, Kyoto, 601-8205 (JP)
(74) Representative: Viering, Jentschura & Partner mbB Patent- und Rechtsanwälte

(57) **Abstract**

A stator core (20) including a plurality of teeth (22) disposed in a circumferential direction and a plurality of slots (24) provided between the teeth (22) and penetrating in an axial direction, and a wedge (30) disposed radially inward of the slot (24) are provided. The stator core (20) includes a groove portion (26) provided at an end of each of the teeth (22) in a circumferential direction. A part of the wedge (30) is disposed in the groove portion (26).

## Description

### Technical Field

The present invention relates to a stator and a wedge insertion device.

### Background Art

Conventionally, a wedge insertion device that inserts a wedge between a coil inserted into a slot of a stator core and the stator core in order to insulate the coil from the stator core is known. For example, JP 2011-200107 A (Patent Literature 1) discloses a coil insertion device including a wedge guide forming a guide groove for inserting a wedge.

### Citation List

### Patent Literature

Patent Literature 1: JP 2011-200107 A

### Summary of Invention

### Technical Problem

However, when the wedge is pushed up and inserted into the slot using the coil insertion device of Patent Literature 1, the wedge may be buckled.

An object of the present invention is to provide a stator and a wedge insertion device that suppress buckling of a wedge.

### Solution to Problem

A stator according to a first aspect of the present invention includes a stator core including a plurality of teeth disposed in a circumferential direction and a plurality of slots provided between the teeth and penetrating in an axial direction, and a wedge disposed radially inward of the slot. The stator core includes a groove portion provided at an end of each of the teeth in a circumferential direction. A part of the wedge is disposed in the groove portion.

A wedge insertion device according to a second aspect of the present invention inserts a wedge disposed between a coil inserted into a slot from one side to another side in an axial direction and a stator core, the slot penetrating a stator core in an axial direction thereof. The stator core includes a groove portion provided at an end of each of the teeth in a circumferential direction. The wedge insertion device includes a wedge guide that is disposed on one side in an axial direction of the stator core, extends in the axial direction, and guides the wedge to the groove portion. An end surface on another side in the axial direction of the wedge guide has a shape corresponding to the groove portion.

### Advantageous Effects of Invention

The present invention can provide a stator and a wedge insertion device that suppress buckling of a wedge.

### Brief Description of Drawings

Fig. 1 is a schematic view of a cross section perpendicular to an axial direction of a stator of a first embodiment.
Fig. 2 is an enlarged view of the stator of the first embodiment, and illustrates a cross section of a region II in Fig. 1.
Fig. 3 is a schematic view illustrating a wedge insertion device of the first embodiment.
Fig. 4 is a flowchart illustrating a method for manufacturing the stator of the first embodiment.
Fig. 5 is a schematic view illustrating the method for manufacturing the stator of the first embodiment.
Fig. 6 is a schematic view illustrating the method for manufacturing the stator of the first embodiment.
Fig. 7 is a schematic view illustrating the method for manufacturing the stator of the first embodiment.
Fig. 8 is an enlarged view of a stator of a second embodiment, and corresponds to Fig. 2.
Fig. 9 is an enlarged view of a stator of a third embodiment, and corresponds to Fig. 2.
Fig. 10 is an enlarged view of a stator of a fourth embodiment, and corresponds to Fig. 2.
Fig. 11 is an enlarged view of a stator of a comparative example, and corresponds to Fig. 2.

### Description of Embodiments

Hereinafter, embodiments of the present invention will be described with reference to the drawings. In the following drawings, an identical or corresponding component is denoted by an identical reference sign, and the description will not be repeated.

In the following description, a direction in which the central axis of a stator 1 extends, that is, a penetrating direction of a slot 24 is referred to as an "axial direction". One side along the axial direction is referred to as the lower side, and the other side is referred to as the upper side. The upward and downward direction is for use in specifying the positional relationship, and does not limit the actual direction. That is, a downward direction does not necessarily mean the direction of gravity. The axial direction is not particularly limited, and includes a vertical direction, a horizontal direction, a direction intersecting these directions, and the like.

Additionally, a direction orthogonal to the central axis of the stator 1 is referred to as "radial direction". Moreover, a direction along an arc centered on the central axis of the stator 1 is referred to as "circumferential direction".

In addition, in the drawings used in the following description, a characteristic portion may be enlarged for the purpose of emphasizing the characteristic portion. Therefore, the dimensions and ratios of respective components are not necessarily the same as actual ones. Additionally, for the same purpose, less characteristic portions may be omitted from the drawings.

### [First embodiment]

### (Stator)

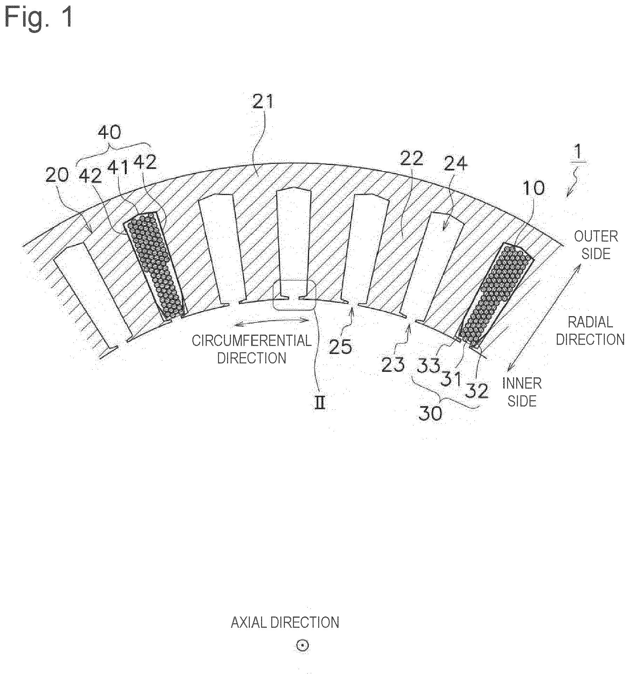

As illustrated in Fig. 1, the stator 1 is a component of a motor and interacts with a rotor (not shown) to generate rotational torque. A distributed winding, in which a coil 10 is wound across several slots 24, is applied to the stator 1 of the present embodiment. The stator 1 has the coil 10, a stator core 20, a wedge 30, and an insulating paper 40.

### <Stator core>

The stator core 20 is formed in a hollow columnar shape. The stator core 20 is formed by laminating thin silicon steel plates. The stator core 20 includes a core back 21, a plurality of teeth 22, and a plurality of umbrella 23.

The core back 21 is annular. The core back 21 of the present embodiment includes one member. That is, the core back 21 is configured by one component instead of a plurality of components that can be divided in the circumferential direction.

The plurality of teeth 22 extend from the core back 21 in the radial direction. The plurality of teeth 22 are disposed in the circumferential direction.

Specifically, the teeth 22 extend radially inward from the core back 21. The teeth 22 are disposed at equal intervals in the circumferential direction in the inner end of the core back 21 in the radial direction. Note that the circumferential width of the teeth 22 of the present embodiment is constant, but may not be constant.

The slot 24 is provided between the teeth 22 adjacent to each other in the circumferential direction. The slot 24 is a gap in the circumferential direction.

The plurality of slots 24 penetrates in the axial direction. The circumferential width of the slot 24 increases radially outward. The circumferential width of the slot 24 of the present embodiment gradually increases radially outward.

The slot 24 has a slot open 25 located at the inner end in the radial direction. The slot open 25 is smaller than the circumferential width of the space accommodating the coil 10 in the slot 24.

The plurality of umbrella 23 is located on both sides of the slot 24 in the circumferential direction and protrudes in the circumferential direction. Specifically, the plurality of umbrella 23 are connected to the inner end of each of the teeth 22 in the radial direction and extends to both sides in the circumferential direction. That is, the circumferential width of the umbrella 23 is larger than the circumferential width of the inner end of the teeth 22 in the radial direction. The plurality of umbrella 23 are disposed at equal intervals in the circumferential direction. When used in a motor, the plurality of umbrella 23 face the rotor.

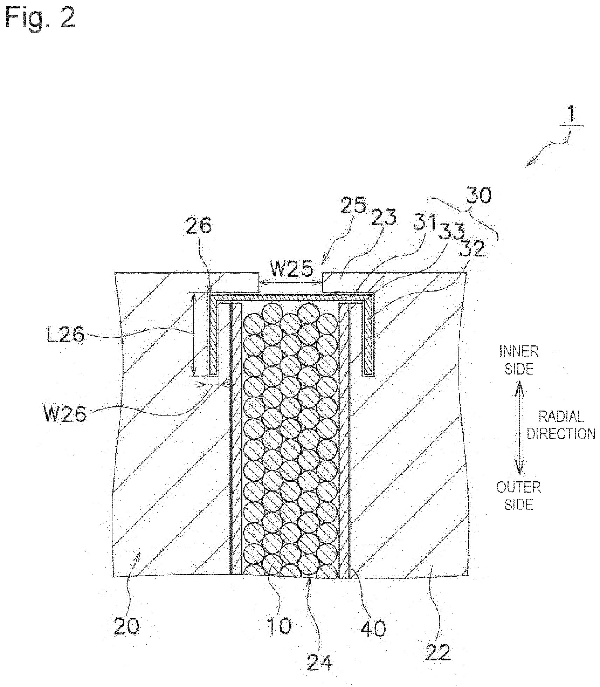

As illustrated in Fig. 2, the stator core 20 has a groove portion 26 provided at the end of each of the teeth 22 in the circumferential direction. The groove portion 26 penetrates in the axial direction. The groove portion 26 will be described later.

### <Wedge>

The wedge 30 is disposed radially inward of the slot 24. Specifically, the wedge 30 is disposed between the coil 10 inserted into the slot 24 and the stator core 20. In Fig. 1, the wedge 30 blocks the slot open 25. The wedge 30 insulates the stator core 20 from the coil 10.

The wedge 30 contacts the umbrella 23. As a result, the wedge 30 can be easily inserted into the slot 24.

The wedge 30 of the present embodiment has a U-shape as viewed in the axial direction. Specifically, the wedge 30 includes a first shape portion 31, two second shape portions 32, and a bent portion 33.

The first shape portion 31 extends in the circumferential direction. The first shape portion 31 is linear as viewed in the axial direction. As a result, the wedge 30 can be easily inserted into the slot 24.

The two second shape portions 32 extend radially outward. The second shape portion 32 is linear as viewed in the axial direction.

The bent portion 33 connects both ends of the first shape portion 31 and the inner end of the second shape portion 32 in the radial direction. The bent portion 33 is a bend corner of the wedge 30, and may be curved or sharp.

The first shape portion 31, the second shape portion 32, and the bent portion 33 may be formed of one member, or different members may be connected to each other.

### <Insulating paper>

The insulating paper 40 covers the coil 10 inserted into the slot 24. The insulating paper 40 is disposed along the teeth 22 that define a space excluding the inner side of the slot 24 in the radial direction. The insulating paper 40 of the present embodiment has a U shape. Specifically, the insulating paper 40 includes a circumferential portion 41 extending in the circumferential direction and two radial portions 42 extending radially inward from both ends of the circumferential portion 41. In Fig. 1, the opening of the insulating paper 40 and the opening of the wedge 30 are in directions opposite to each other.

### <Groove portion>

Here, the groove portion 26 of the stator core 20 will be described mainly with reference to Fig. 2. Fig. 2 is a schematic view of a state in which the wedge 30 and the insulating paper 40 are provided in one slot 24 in the region II of Fig. 1. Fig. 2 illustrates the groove portion 26 in an exaggerated manner for the purpose of emphasizing the groove portion.

A part of the wedge 30 is disposed in the groove portion 26. Therefore, at the time of manufacturing the stator 1, a part of the wedge 30 can be held by the groove portion 26 and inserted. Therefore, buckling of the wedge 30 can be suppressed.

The groove portion 26 is a space for accommodating a part of the wedge 30. The groove portion 26 is a recess provided at the end of the teeth in the circumferential direction.

The groove portion 26 is formed of a segment. The segment is a part of the teeth 22 and defines the groove portion 26.

The groove portion 26 is located at the inner end of the stator core 20 in the radial direction. Therefore, since the wedge 30 can be disposed at the inner end in the radial direction, the space factor of the coil 10 can be improved.

In addition, the groove portion 26 is located on the outer side of one slot 24 in the circumferential direction. The groove portion 26 is located on the outer side in the circumferential direction of the umbrella 23 protruding from the teeth 22.

The groove portion 26 of the present embodiment has a shape recessed radially outward. As a result, a part of the wedge 30 can be easily disposed in the groove portion 26. In Fig. 2, the groove portion 26 extends in the radial direction.

As viewed in the axial direction, a circumferential width W26 of the groove portion 26 is smaller than a circumferential width W25 of the slot open 25. Accordingly, it is possible to suppress the coil 10 from being disposed in the groove portion 26.

As viewed in the axial direction, the circumferential length (circumferential width W) of the groove portion 26 is smaller than a radial length L26 of the groove portion 26. As a result, deterioration of magnetic characteristics due to the groove portion 26 can be suppressed.

The circumferential width W26 of the groove portion 26 is larger than the circumferential width of the second shape portion 32 of the wedge 30. The radial length L26 of the groove portion 26 is longer than the radial length of the second shape portion 32 of the wedge 30. However, from the viewpoint of magnetic characteristics, the groove portion 26 is preferably small. Therefore, the circumferential width W26 of the groove portion 26 is more than 1 time and preferably 1.2 times or less the circumferential width of the second shape portion 32 of the wedge 30. The radial length L26 of the groove portion 26 is more than 1 time and preferably 1.2 times or less the radial length of the second shape portion 32 of the wedge 30.

The groove portion 26 is continuous with the slot 24. The wedge 30 is accommodated in the groove portion 26 and the slot 24. Here, a part of the wedge 30 is disposed in the groove portion 26 and the rest of the wedge 30 is disposed in the slot 24.

Specifically, the first shape portion 31 of the wedge 30 is disposed in the slot 24. Both ends of the first shape portion 31 in the circumferential direction may be disposed in the slot 24, or may be disposed in the groove portion 26. The second shape portion 32 of the wedge 30 is disposed in the groove portion 26. Further, the bent portion 33 of the wedge 30 is disposed in the groove portion 26. Accordingly, separation of the wedge 30 from the groove portion 26 can be suppressed.

The bent portion 33 may not be in contact with the groove portion 26, but is in contact with the groove portion in the present embodiment. The bent portion 33 may not be in contact with the side surface of the slot 24, but is in contact with the side surface in the present embodiment. Note that Fig. 2 illustrates the respective members separately without being in contact with each other.

### (Wedge insertion device)

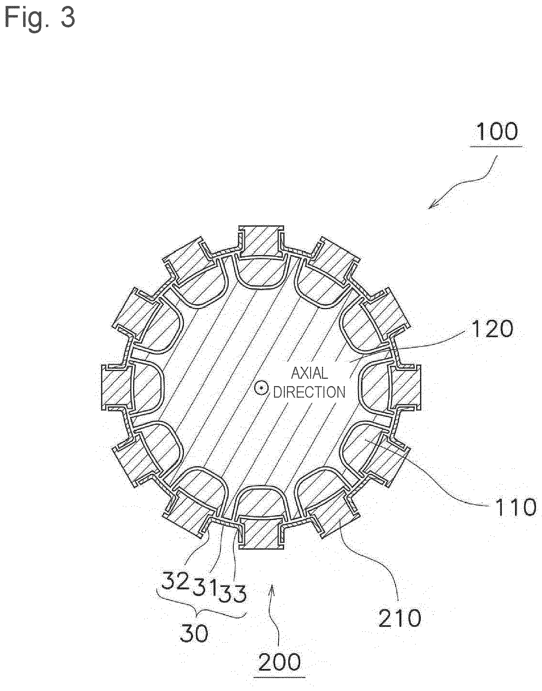

A wedge insertion device 200 will be described with reference to Figs. 1 to 3. Note that Fig. 3 is a cross-sectional view schematically illustrating the wedge insertion device 200 by reducing the number of wedge guides 210 and the like.

As illustrated in Fig. 3, the wedge insertion device 200 inserts the wedge 30 disposed between the coil 10 inserted into the slot 24 and the stator core 20 into the slot 24 penetrating the stator core 20 in the axial direction from one side to the other side in the axial direction. As described above, the stator core 20 has the groove portions 26 provided at the end of the teeth 22 in the circumferential direction. Here, the wedge insertion device 200 inserts the wedge 30 into each of the plurality of slots 24 of the stator core 20.

The wedge insertion device 200 includes the wedge guide 210. The wedge guide 210 guides the wedge 30 to the slot 24. The wedge guide 210 is disposed on one side of the stator core 20 in the axial direction and extends in the axial direction.

The wedge guide 210 of the present embodiment guides the wedge 30 to the groove portion 26. The end surface in the axial direction of the wedge guide 210 in the axial direction has a shape corresponding to the groove portion 26. As a result, the wedge guided by the wedge guide can be easily inserted into the groove portion.

Specifically, the end surface in the axial direction of the wedge guide 210 in the axial direction has a shape that guides a part of the wedge 30 to the groove portion 26 and guides the rest of the wedge 30 to the slot 24.

The wedge insertion device 200 further includes an insertion member that inserts the wedge 30 into the slot 24. The wedge insertion device 200 of the present embodiment further includes a wedge pusher (not illustrated) as an insertion member.

### (Method for manufacturing stator)

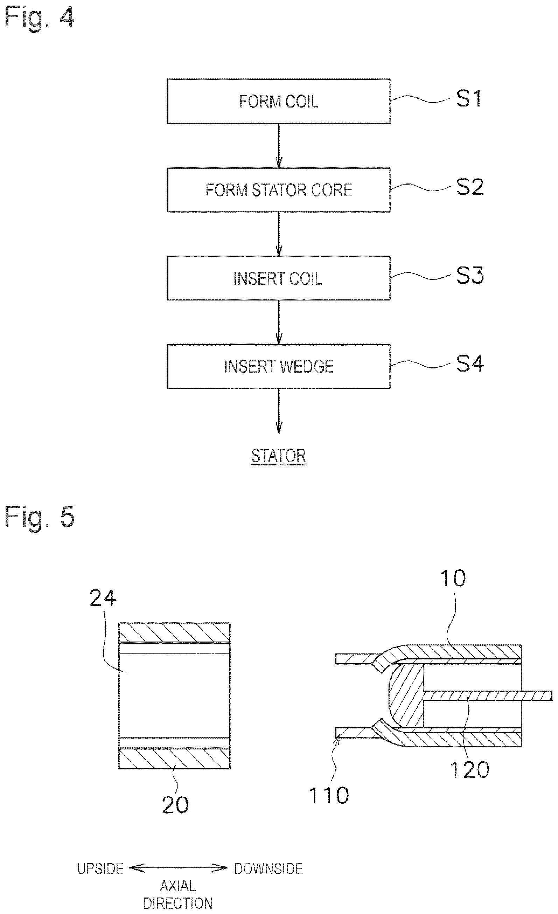

A method for manufacturing the stator 1 of the present embodiment will be described with reference to Figs. 1 to 7. Fig. 4 is a flowchart illustrating a method for manufacturing the stator 1 according to the present embodiment. Figs. 5 to 7 schematically illustrate a state in which a coil insertion device 100 including the wedge insertion device 200 is cut in the axial direction. The coil 10 is inserted into the slot 24 by the coil insertion device 100 in the order of Figs. 5 to 7.

In the present embodiment, the stator 1 is manufactured by inserting the coil 10 into the slot 24 by the coil insertion device 100 and inserting the wedge 30 into the slot 24 by the wedge insertion device 200 described above.

First, as illustrated in Fig. 4, an annular coil 10 is formed (step S1). In step S1, the coil wire is wound in an annular shape to form the coil 10 having two coil side portions accommodated in the slot 24 and a coil crossing portion connecting the two coil side portions and disposed on both sides of the stator core 20 in the axial direction.

As illustrated in Fig. 2, the stator core 20 having the groove portion 26 provided at the end of each of the teeth 22 in the circumferential direction is formed (step S2).

In the present embodiment, before the coil 10 described later is inserted into the slot 24, the insulating paper 40 is disposed in the slot 24.

Next, the coil 10 is inserted into the slot 24 (step S3). This step (S3) is performed as follows, for example.

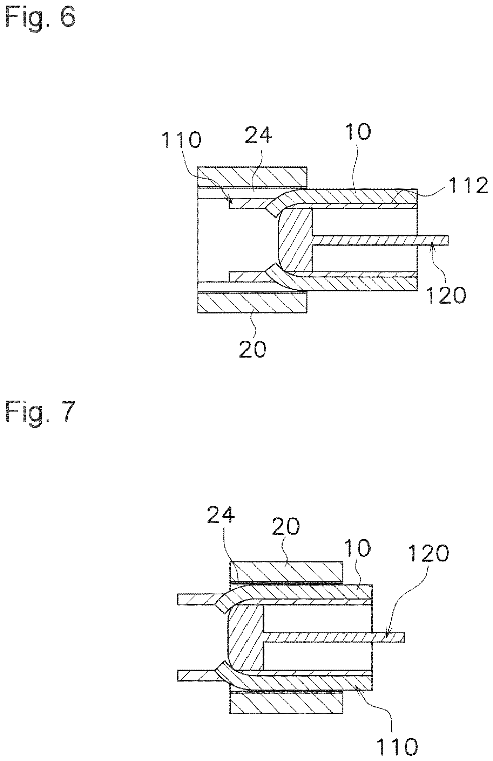

Specifically, as illustrated in Fig. 5, the annular coil 10 formed in step (S1) is held by a blade 110 disposed radially inward of the stator core 20. Next, as illustrated in Figs. 6 and 7, the coil 10 is moved in the axial direction by a stripper 120 as a coil moving mechanism disposed radially inward of the blade 110. Specifically, the stripper 120 is moved from one side to the other side in the axial direction. As a result, the two coil side portions of the coil 10 are disposed in the slot 24, the coil crossing portion on one side in the axial direction straddles between the slots 24 on one side of the stator core 20, and the coil crossing portion on the other side straddles between the slots 24 on the other side of the stator core 20.

In addition, the wedge 30 is disposed in at least one slot 24 and one groove portion 26 between the teeth 22 adjacent in the circumferential direction (step S4). In step S5, as illustrated in Fig. 3, the wedge guide 210 is used to guide the wedge 30 to the groove portion 26 and the slot 24. Then, the wedge 30 is moved in the axial direction using the wedge pusher. Specifically, the wedge pusher is moved from one side to the other side in the axial direction. As a result, a part of the wedge 30 can be inserted into the groove portion 26, and the rest of the wedge 30 can be inserted into the slot 24. As a result, the wedge 30 can be disposed between the coil 10 and the slot 24. Therefore, the wedge 30 can close the slot open 25.

By performing the above steps (steps S1 to S4), the stator 1 illustrated in Figs. 1 and 2 can be manufactured.

### (Operation and effects)

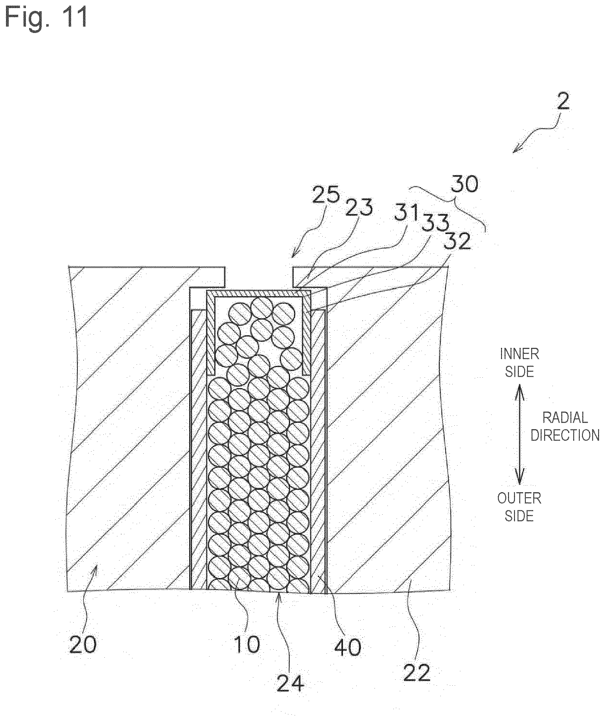

Next, operations and effects of the stator 1 of the present embodiment will be described in comparison with a stator 2 of a comparative example of Fig. 11. Fig. 11 is an enlarged schematic view illustrating the stator 2 of the comparative example and corresponds to Fig. 2.

As illustrated in Fig. 11, the stator core 20 of the stator 2 of the comparative example does not include the groove portion 26 of the present embodiment.
Therefore, when the wedge 30 is inserted into the slot 24, the coil 10 previously inserted into the slot 24 pushes the wedge 30. Therefore, the wedge 30 may be inserted at a position different from the target position in the slot 24. This may cause the wedge 30 to buckle as the wedge 30 is moved from one side to the other side in the slot 24 in the axial direction.

On the other hand, as illustrated in Fig. 2, the stator core 20 of the stator 1 of the present embodiment is provided with a groove portion 26 for inserting the wedge 30. Therefore, at the time of manufacturing the stator 1, the wedge 30 can be inserted into the slot 24 in a state where the groove portion 26 holds the wedge 30. That is, the teeth 22 defining the groove portion 26 can protect the wedge 30 from the pressing of the coil 10. Therefore, buckling of the wedge 30 can be suppressed.

Further, since the groove portion 26 can hold a part of the wedge 30, insertion and arrangement of the wedge 30 into the slot 24 are easy.

### [Second embodiment]

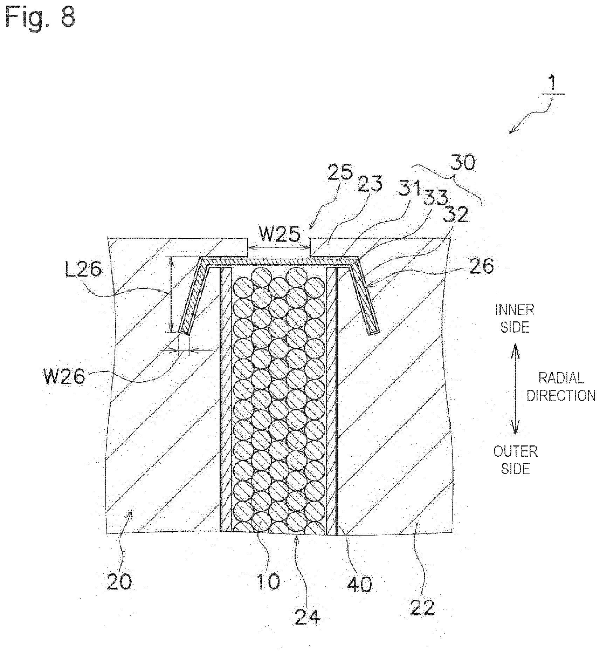

The stator of a second embodiment illustrated in Fig. 8 basically has the same configuration as the stator 1 illustrated in Fig. 2, but differs in the shape of the groove portion. Fig. 8 is an enlarged schematic view illustrating the stator 1 of the second embodiment and corresponds to Fig. 2.

The groove portion 26 of the first embodiment illustrated in Fig. 2 has a shape extending along the radial direction, but the groove portion 26 of the second embodiment illustrated in Fig. 8 is different in having a shape extending to the outer side in the circumferential direction.

### [Third embodiment]

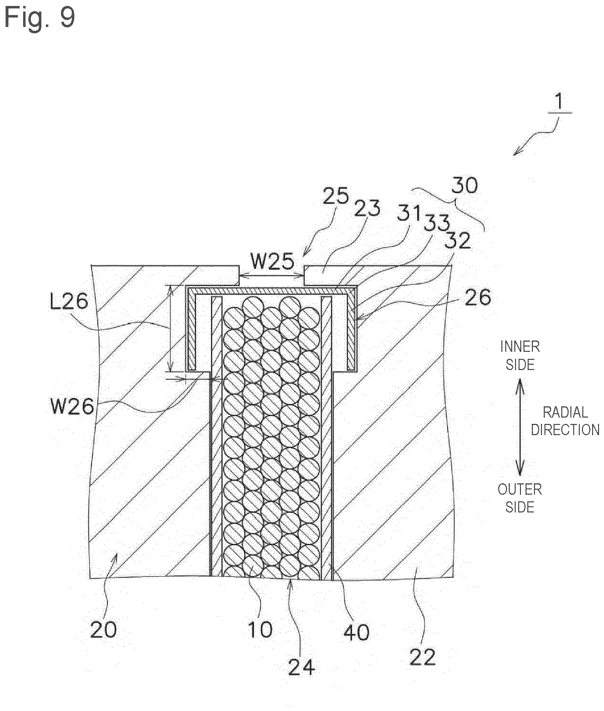

The stator of a third embodiment illustrated in Fig. 9 basically has the same configuration as the stator 1 illustrated in Fig. 2, but differs in the shape of the groove portion. Fig. 9 is an enlarged schematic view illustrating the stator 1 of the third embodiment and corresponds to Fig. 2.

The groove portion 26 of the first embodiment illustrated in Fig. 2 is separated from the slot 24, but the groove portion 26 of the third embodiment illustrated in Fig. 9 is different in being integrated with the slot 24.

### [Fourth embodiment]

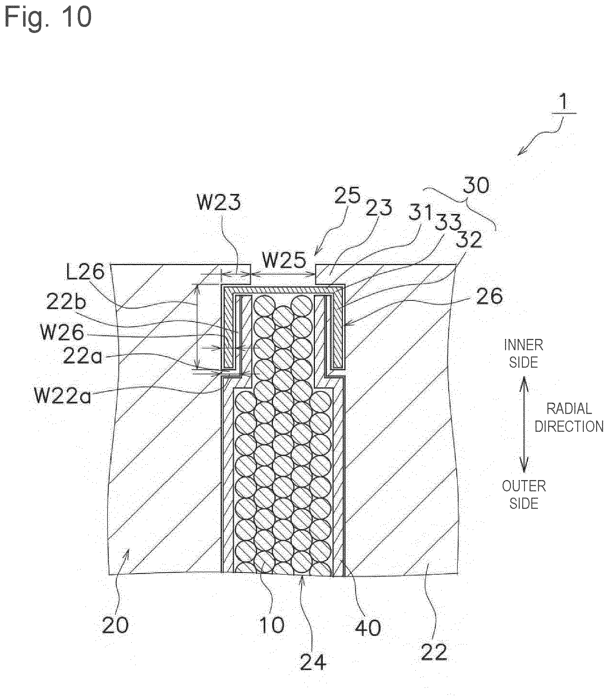

The stator of a fourth embodiment illustrated in Fig. 10 basically has the same configuration as the stator 1 illustrated in Fig. 2, but differs in the shape of the groove portion. Fig. 10 is an enlarged schematic view illustrating the stator 1 of the fourth embodiment and corresponds to Fig. 2.

The groove portion 26 of the first embodiment illustrated in Fig. 2 is defined by a portion extending in the radial direction of the teeth 22, but the groove portion 26 of the fourth embodiment illustrated in Fig. 10 is different in that it is defined by a protrusion 22a further extending to the outer side in the circumferential direction.

Specifically, the teeth 22 of the present embodiment have the protrusion 22a that defines the groove portion 26 and extends in the circumferential direction. As a result, deterioration of magnetic characteristics due to the groove portion 26 can be suppressed.

In Fig. 10, the protrusion 22a extending in the circumferential direction and a protrusion 22b extending in the radial direction are provided in the slot 24 of the first embodiment. The protrusion 22a and the protrusion 22b define the groove portion 26 and are integrated.

A circumferential width W22a of the protrusion 22a is equal to or less than a circumferential width W23 protruding from the teeth 22 in the umbrella 23, and is preferably smaller than the circumferential width W23. In this case, it is possible to suppress the protrusion 22a from hindering the insertion of the coil 10 into the slot 24.

The protrusion 22a may be disposed in the entire axial direction of the stator core 20, but is preferably disposed only at the end on one side of the stator core 20 in the axial direction. That is, the protrusion 22a is preferably not disposed at the other end of the stator core 20 in the axial direction. In this case, the groove portion 26 can hold the wedge 30 at the one-side end in the axial direction and prevent the insertion of the coil 10 from being hindered at portions other than the one-side end in the axial direction.

### (First modification)

The shape of the groove portion 26 of the present invention is not limited to the shape of the groove portion 26 of the first to fourth embodiments described above as long as a part of the wedge 30 is disposed.

### (Second modification)

In the first to fourth embodiments described above, the stator core 20 has the groove portion 26 having the same shape, but the present invention is not limited thereto. The stator core of the present invention may have two or more kinds of groove portions of the first to fourth embodiments.

### (Third modification)

In the above-described embodiment, as illustrated in Fig. 1, the two slots 24 into which the coil is inserted are one slot 24 and another slot 24 sandwiching the four slots 24. However, the present invention is not limited to this.

### (Fourth modification)

In the above-described embodiment, the method for inserting one coil 10 into two slots 24 has been described as an example. A plurality of coils 10 may be simultaneously inserted into four or more slots 24.

The embodiments disclosed herein should be considered as an example in all points and not restrictive. The scope of the present invention is shown not by the embodiments described above but by the claims, and it is intended that all modifications within the meaning and scope equivalent to the scope of the claims are included.

### Reference Signs List

- 1: stator
- 10: coil
- 20: stator core
- 21: core back
- 22: teeth
- 22a: protrusion
- 23: umbrella
- 24: slot
- 26: groove portion
- 30: wedge
- 31: first shape portion
- 32: second shape portion
- 33: bent portion
- 200: wedge insertion device
- 210: wedge guide

## Claims

1. A stator (1) comprising:
a stator core (20) including a plurality of teeth (22) disposed in a circumferential direction and a plurality of slots (24) provided between the teeth (22) and penetrating in an axial direction; and
a wedge (30) disposed radially inward of the slot (24), wherein
the stator core (20) includes a groove portion (26) provided at an end of each of the teeth (22) in a circumferential direction, and
a part of the wedge (30) is disposed in the groove portion (26).

2. The stator (1) according to claim 1, wherein
the slot (24) has a slot open (25) located at an inner end in a radial direction, and
a circumferential width of the groove portion (26) is smaller than a circumferential width of the slot open (25) as viewed in an axial direction.

3. The stator (1) according to claim 1 or 2, wherein a circumferential length of the groove portion (26) is smaller than a radial length of the groove portion (26) as viewed in an axial direction.

4. The stator (1) according to any one of claims 1 to 3, wherein
the stator core (20) further includes an umbrella (23) positioned on both sides of the slot (24) in a circumferential direction and protruding in a circumferential direction, and
the wedge (30) is brought into contact with the umbrella (23).

5. The stator (1) according to any one of claims 1 to 4, wherein the groove portion (26) has a shape recessed radially outward.

6. The stator (1) according to any one of claims 1 to 5, wherein
the wedge (30) includes:
a first shape portion (31) extending in a circumferential direction;
two second shape portions (32) extending radially outward; and
a bent portion (33) connecting both ends of the first shape portion (31) in a circumferential direction and an inner end of the second shape portion (32) in a radial direction, and
the bent portion (33) is disposed in the groove portion (26).

7. The stator (1) according to claim 6, wherein the first shape portion (31) is linear as viewed in an axial direction.

8. The stator (1) according to any one of claims 1 to 7, wherein the teeth (22) each have a protrusion (22a) defining the groove portion (26) and extending in a circumferential direction.

9. The stator (1) according to claim 8, wherein
the stator core (20) further includes an umbrella (23) positioned on both sides of the slot (24) in a circumferential direction and protruding in a circumferential direction, and
a circumferential width of the protrusion (22a) is smaller than a circumferential width protruding from the teeth (22) in the umbrella (23).

10. The stator (1) according to claim 8 or 9, wherein the protrusion (22a) is disposed only at an end on one side in an axial direction of the stator core (20).

11. A wedge insertion device (200) that inserts a wedge (30) disposed between a coil (10) inserted into a slot (24) from one side to another side in an axial direction and a stator core (20), the slot (24) penetrating the stator core (20) in an axial direction thereof, wherein
the stator core (20) includes a groove portion (26) provided at an end of each of the teeth (22) in a circumferential direction,
the wedge insertion device (200) comprises a wedge guide (210) that is disposed on one side in an axial direction of the stator core (20), extends in the axial direction, and guides the wedge (30) to the groove portion (26), and
an end surface on another side in the axial direction of the wedge guide (210) has a shape corresponding to the groove portion (26).
